(19) Europäisches Patentamt
European Patent Office
Office européen des brevets

(11) **EP 2 385 523 B1**

(12) **EUROPEAN PATENT SPECIFICATION**

(45) Date of publication and mention
of the grant of the patent:
**17.04.2013 Bulletin 2013/16**

(51) Int Cl.:
***G11B 5/60*** *(2006.01)*

(21) Application number: **11156012.4**

(22) Date of filing: **25.02.2011**

(54) **Method of detecting touch-down of a head and disk drive using the method of detecting the touch-down of the head**

Verfahren zur Detektion des Aufsetzen eines Kopfs und Plattenlaufwerk unter Verwendung des Verfahrens zur Detektion des Aufsetzen eines Kopfes

Procédé de détection de la prise de contact d'une tête et lecteur de disque pour détecter la prise de contact de la tête

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2010 KR 20100027541**

(43) Date of publication of application:
**09.11.2011 Bulletin 2011/45**

(73) Proprietor: **Samsung Electronics Co., Ltd.**
**Suwon-si, Gyeonggi-do, 443-742 (KR)**

(72) Inventor: **Yang, Won-choul**
**Gyeonggi-do (KR)**

(74) Representative: **Grünecker, Kinkeldey,**
**Stockmair & Schwanhäusser**
**Leopoldstrasse 4**
**80802 München (DE)**

(56) References cited:
**US-A1- 2002 097 513     US-A1- 2008 225 426**
**US-A1- 2008 239 581     US-B1- 7 375 915**

**Description**

CROSS-REFERENCE TO RELATED APPLICATIONS

This application claims the benefit of Korean Patent Application No. 10-2010-0027541, filed on March 26, 2010, in the Korean Intellectual Property Office.

BACKGROUND

The inventive concept relates to a method and apparatus for controlling a head flying height in a disk drive, and more particularly, to a method and apparatus for controlling a head flying height by detecting a touch-down point of the head on a disk in a disk drive.

A disk drive, as a data storage device, is connected to a host device, and records data in a storage medium or reads data recorded in the storage medium according to a command of the host device. As technology improves, disk drives gradually have a higher capacity, a higher density, and a more compact size, and accordingly the bits per inch (BPI), (i.e., the density in a disk rotation direction), and the tracks per inch (TPI), (i.e., the density in the radius direction), are increasing. Thus a more accurate mechanism is required.

Accordingly, there is a demand for research into a technology of accurately measuring a touch-down state of a head so as to adjust a head flying height, i.e., an interval or gap between the head and a disk, which affects performance of the disk drive.

US 2008/0239581 A1 relates to an AC power source connected to a write coil mounted on a head slider for determination of contact of a head slider with a storage medium. The AC power source outputs the alternating current having a specific frequency. A measuring circuit measures a sequence of indices for the alternating current supplied to the write coil. A component corresponding to the specific frequency is extracted from the sequence of the indices. This serves to eliminate components corresponding to frequencies other than the specific frequency, namely noise. A detecting circuit detects contact between the head slider and the storage medium based on a change in the amplitude of the sequence appearing at the specific frequency. The contact can thus reliably be detected between the head slider and the storage medium.

US 2008/0225426 A1 relates to a magnetic device for writing to and reading from a magnetic medium and a sensor disposed adjacent to the magnetic device and proximate to the magnetic medium. The sensor generates signals related to thermal variations in the sensor caused by changes in a distance between the magnetic device and the magnetic medium.

US 2002/0097513 A1 relates to an apparatus and associated method for detecting head collision with disc media, or other matter, during a write operation. The method and apparatus generally monitor the resistance of an MR element on the head in order to detect a temperature increases indicative of a head collision. The resistance can be compared to a pre-selected threshold to generate an output indicative of head collision.

US 7,375,915 B1 relates to a disk drive for storing data including a drive housing, a storage disk that is rotatably coupled to the drive housing, a slider assembly positioned near the storage disk, and a drive circuitry. The slider assembly includes a head that interacts with the storage disk during a data transfer operation and a slider mover. The drive circuitry directs a first power level to slider mover to maintain the head at a first HtD spacing, and a second power level to the slider mover to maintain the head at a second HtD spacing, and a variable, transition power to the slider mover during a transition between the first power level being directed to the slider mover and the second power level being directed to the slider mover. The transition power is tailored to rapidly move the head between the HtD spacings.

SUMMARY

It is the object of the present invention to provide a method of detecting a touch-down of a head on a rotating disk.

This object is solved by the subject matter of the independent claims. Preferred embodiments are defined by the dependent claims.

The inventive concept also provides a method of adjusting a head flying height by detecting a touch-down point of the head on a disk in a data storage device.

The inventive concept also provides a disk drive for adjusting a head flying height by using a method of detecting a touch-down of the head, wherein a touch-down point of the head on a disk is detected.

The inventive concept also provides a storage medium having recorded thereon program codes for executing a method of detecting a touch-down of a head, wherein a touch-down point of the head on a disk is detected in a data storage device, and a method of adjusting a head flying height by using the method of detecting the touch-down of the head.

According to an aspect of the inventive concept, there is provided a method of detecting a touch-down of a head on a rotating disk. The method includes: detecting a change of an electrical characteristic of a sensor installed in a slider, wherein the electrical characteristic changes according to temperature; and determining that the head flying height has reached a touch-down flying height if the detected change of the electric characteristic satisfies a threshold condition.

The electric characteristic factor value may include a resistance value.

The sensor may include a device including nickel iron (NiFe).

The sensor may be installed in a location nearest to a surface of the disk.

In the detecting of the change of the electric characteristic factor value, a change of a resistance value may be calculated by measuring a current flowing in the sensor while applying a constant voltage to the sensor.

In the detecting of the change of the electrical characteristic, a change of a resistance value may be calculated by measuring a voltage between two terminals of the sensor while applying a constant current to the sensor.

The head flying height may change according to a power supplied to a heater installed in the slider.

Detecting of the change of the electric characteristic factor value may include: gradually lowering the head flying height by changing a value of a first signal for adjusting the head flying height on the rotating disk; and detecting a change of a resistance value of the sensor according to the change of the value of the first signal.

The threshold condition may include a condition in which the detected electrical characteristic reaches a first threshold value.

The threshold condition may include a condition in which a change rate of the electrical characteristic with respect to a change of power supplied to a heater installed in the slider reaches a second threshold value.

According to another aspect of the inventive concept, there is provided a method of adjusting a head flying height. The method includes: changing a value of a first signal for adjusting the head flying height on the rotating disk and calculating a magnetic space changing amount profile between the head and the rotating disk according to the change of the value of the first signal; detecting a change of an electrical characteristic of a sensor installed in a slider, wherein the electrical characteristic changes according to temperature, and determining a point of time when the head touches down on the rotating disk based on the detected change of the electrical characteristic; and determining a value of the first signal corresponding to a target flying height from the calculated magnetic space changing amount profile between the head and the rotating disk based on a value of the first signal at the determined point of time when the head touches down the rotating disk.

The first signal may include a signal for determining an intensity of power supplied to a heater installed in the slider.

A point of time when the detected change of the electrical characteristic of the sensor satisfies a first threshold condition or when a change rate of the electrical characteristic of the sensor with respect to a change of power supplied to a heater installed in the slider satisfies a second threshold condition may be determined to be a point of time when a touch-down occurs.

According to another aspect of the inventive concept, there is provided a disk drive comprising: a disk for storing information; a slider in which a heater, a sensor having an electrical characteristic that changes according to temperature, and a head for recording information on the disk or reading information from the disk are installed; and a controller for detecting a change of the electrical characteristic of the sensor according to a change of a value of a first signal for adjusting power supplied to the heater, and for controlling a head flying height by determining a point of time when the head touches down on the disk based on the detected change of the electrical characteristic of the sensor.

The controller may calculate a magnetic space changing amount profile between the head and the disk according to the change of the value of the first signal, and determine a value of the first signal corresponding to a target flying height of the head from the calculated magnetic space changing amount profile between the head and the disk based on a value of the first signal at the point of time when the head touches down on the disk.

The slider may include pads for electrically connecting the heater, the sensor, and the head to a preamplifier circuit.

The pads may include first and second pads connected to the heater, third and fourth pads connected to the sensor, fifth and sixth pads connected to a writing element included in the head, and seventh and eighth pads connected to a reading element included in the head.

According to another aspect of the inventive concept, there is provided a tangible computer readable recording medium having recorded thereon a program for executing a method of detecting a touch-down of a head, the method including: detecting a change of an electrical characteristic of a sensor installed in a slider, wherein the electrical characteristic changes according to temperature; and determining that the head flying height has reached a touch-down flying height if the detected change of the electrical characteristic satisfies a threshold condition.

BRIEF DESCRIPTION OF THE DRAWINGS

Exemplary embodiments of the inventive concept will be more clearly understood from the following detailed description taken in conjunction with the accompanying drawings in which:

FIG. 1 is a block diagram of an example embodiment of a data storage device;

FIG. 2 illustrates an example embodiment of a software operation system of software of the data storage device of FIG. 1;

FIG. 3 is a plan view of an example embodiment of a head disk assembly of a disk drive;

FIG. 4 is a diagram of an example embodiment of a disk drive;

FIG. 5 is a plan view of an example embodiment of a slider of a disk drive;

FIG. 6 is a cross-sectional view of a head mounted on the slider of FIG. 5;

FIG. 7 is a wiring diagram of an example embodiment of pads of a slider and a preamplifier in a disk drive;

FIG. 8 is a structural diagram of an example embodiment of an apparatus for adjusting a head flying height;

FIG. 9 is a structural diagram of another example embodiment of an apparatus for adjusting a head flying height;

FIG. 10 is a diagram illustrating an example embodiment of a composition of sectors in one track of a disk constituting a recording medium;

FIG. 11 is a diagram illustrating an example embodiment of a structure of a servo information field shown in FIG. 10;

FIG. 12 is a flowchart illustrating an example embodiment of a method of adjusting a head flying height;

FIG. 13 is a flowchart illustrating an example embodiment of a method of detecting a touch-down of a head;

FIG. 14 is a flowchart illustrating another example embodiment of a method of detecting a touch-down of a head;

FIG. 15 is a graph showing a resistance value with respect to temperature in a nickel iron (NiFe) device that is used as a sensor installed in a slider;

FIG. 16 is a graph showing a change of a resistance value of a sensor and a change rate according to power supplied to a heater installed in a slider, according to an embodiment of the inventive concept;

FIG. 17 is a graph showing change characteristics of a resistance value of a sensor according to power supplied to a heater, according to used temperature of a disk drive and regions of a disk; and

FIG. 18 is a graph showing change rate characteristics of a resistance value of a sensor according to power supplied to a heater, according to used temperature of a disk drive and regions of a disk.

DETAILED DESCRIPTION OF THE EMBODIMENTS

The inventive concept will now be described more fully with reference to the accompanying drawings, in which exemplary embodiments of the inventive concept are shown. The inventive concept may, however, be embodied in many different forms and should not be construed as being limited to the embodiments set forth herein; rather, these embodiments are provided so that this disclosure will be thorough and complete, and will fully convey the concept of the inventive concept to those of ordinary skill in the art. Like reference numerals in the drawings denote like elements, and thus repetitions of their descriptions will be omitted.

The inventive concept will now be described more fully with reference to the accompanying drawings, in which exemplary embodiments of the inventive concept are shown.

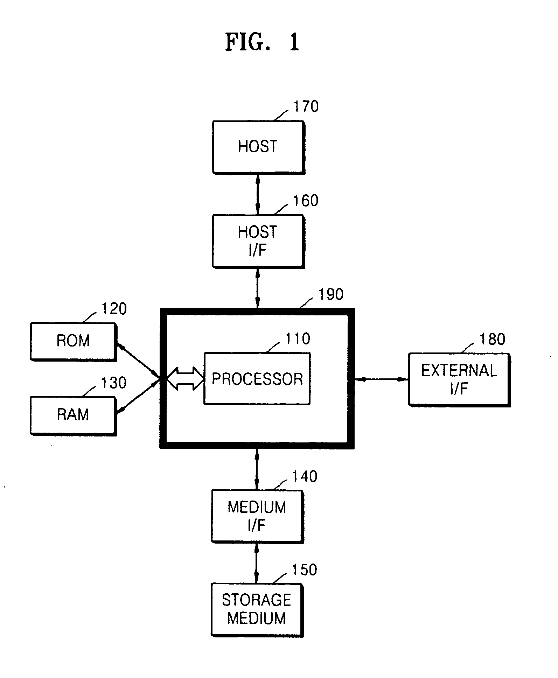

FIG. 1 is a block diagram of an example embodiment of a data storage device.

Referring to FIG. 1, a data storage device includes a processor 110, a read only memory (ROM) 120, a random access memory (RAM) 130, a medium interface (I/F) 140, a storage medium 150, a host I/F 160, a host device 170, an external I/F 180, and a bus 190.

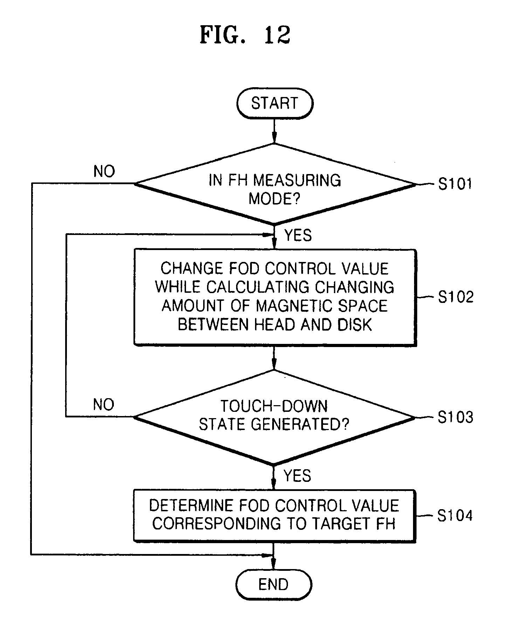

The processor 110 interprets a command and controls elements of the data storage device according to a result of the interpretation. Processor 110 includes a code object management unit (not shown), and loads a code object stored in the storage medium 150 into the RAM 130 by using the code object management unit. The processor 110 loads code objects for executing a method of detecting a touch-down of a head and a method of adjusting a head flying height by using the method of detecting a touch-down of a head, as illustrated in FIGS. 12 through 14, into RAM 130, before performing a touch-down test.

Processor 110 executes tasks of detecting a touch-down of the head and adjusting a head flying height according to the methods of FIGS. 12 through 14 by using the code objects loaded into RAM 130, and stores information required to detect the touch-down of the head and adjust the head flying height in storage medium 150 or ROM 120. Examples of such information include first and second threshold values TH1 and TH2 used to determine a touch-down proximity state, second and third threshold values TH2 and TH3 used to determine the touch-down state, and a step increment of a flying on demand digital-to-analog converted signal (FOD DAC) ($\Delta$V).

Methods of detecting the touch-down of the head and of adjusting the head flying height by processor 110 will be described in detail later with reference to FIGS. 12 through 14.

In ROM 120, program codes and data required for operating the data storage device are stored.

The program codes and data stored in ROM 120 or those stored in storage medium 150 are loaded into RAM 130 according to control by processor 110.

Storage medium 150 may include a disk as a main storage medium of the data storage device. The data storage device may include a disk drive.

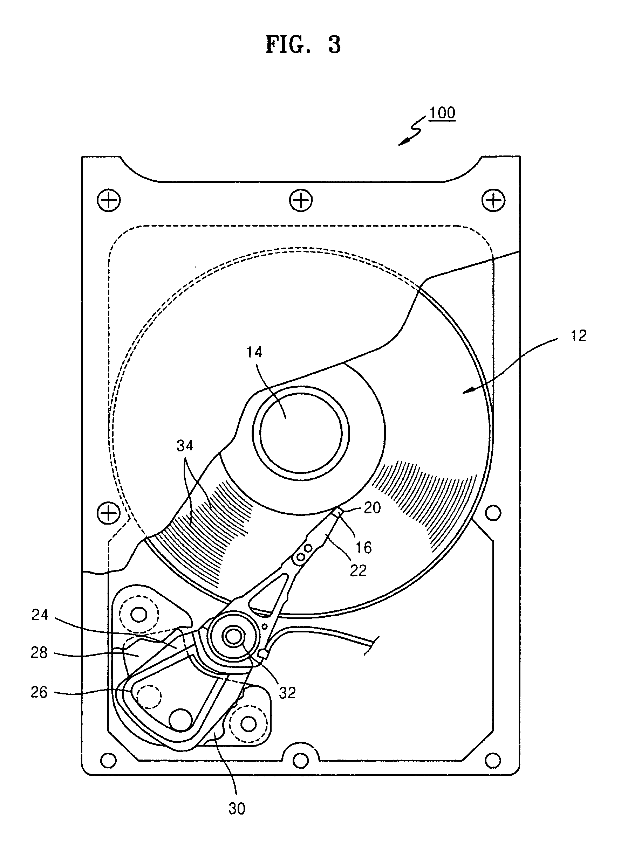

FIG. 3 is a plan view of an example embodiment of head disk assembly 100 of a disk drive. Referring to FIG. 3, head disk assembly 100 includes at least one disk 12 that is rotated by a spindle motor 14. The disk drive also includes a head 16 that is located adjacent to a surface of disk 12.

While disk 12 is being rotated, head 16 senses a magnetic field of disk 12 or magnetizes disk 12 to read or write information from/to disk 12. In general, head 16 is associated with the surface of disk 12. Although one head 16 is illustrated in FIG. 3, it should be understood that head 16 includes a writing head (so-called writing element) for magnetizing the disk 12 and a reading head (so-called reading element) for sensing the magnetic field of disk 12. The reading head may include a magneto-resistive (MR) device. Head 16 is usually referred to as a magnetic head or a transducer.

Head 16 may be mounted on a slider 20. Slider 20 generates an air bearing between a surface of the head 16 and the surface of disk 12. Slider 20 is integrated with a head gimbal assembly 22. Head gimbal assembly 22 is attached to an actuator arm 24 having a voice coil 26. Voice coil 26 is disposed adjacent to a magnetic assembly 28 to define a voice coil motor (VCM) 30. A current supplied to voice coil 26 generates torque for rotating actuator arm 24 with respect to a bearing assembly 32. Due to the rotation of actuator arm 24, head 16 is moved across the surface of disk 12.

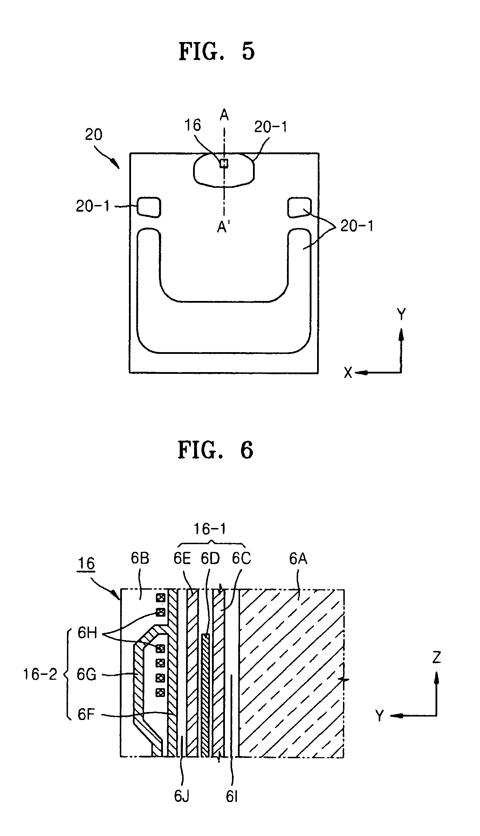

FIG. 5 is a plan view of an example embodiment of slider 20 of the disk drive.

As illustrated in FIG. 5, patterns 20-1 are formed on a surface of slider 20 so as to generate an air bearing between the surface of slider 20 and the surface of disk 12. Also, head 16 is mounted on slider 20.

FIG. 6 is a cross-sectional view of head 16 mounted on slider 20 taken along a line A-A' in FIG. 5. As shown in FIG. 6, head 16 includes a reading element 16-1 and a writing element 16-2. In detail, reading element 16-1 includes a pair of shields 6C and 6E and an MR device 6D disposed between shields 6C and 6E, and writing element 16-2 includes a main pole 6F for applying a magnetic field on disk 12, a return yoke 6G for forming a magnetic path with the main pole 6F, and a coil 6H for inducing the magnetic field at the main pole 6F. Also, head 16 is mounted on a slider body 6A which may be formed of AlTiC and surrounded by a protection layer 6B, which may be formed of alumina $(Al_2O_3)$. Also, a heater 6I for adjusting the head flying height is mounted on slider 20. When power is supplied to the heater 6I mounted on slider 20, a pole tip, i.e., the end of head 16, thermally expands, and thus the head flying height with respect to the surface of disk 12 is reduced. In other words, the head flying height changes according to the amplitude of current or voltage supplied to the heater 6I.

Also, a sensor 6J having an electric characteristic factor value that changes according to temperature is mounted on slider 20. The sensor 6J may use a material having a resistance value that changes according to temperature, for example, may be a device formed of nickel iron (NiFe). The sensor 6J may be installed to a location of slider 20 that is nearest to the surface of disk 12.

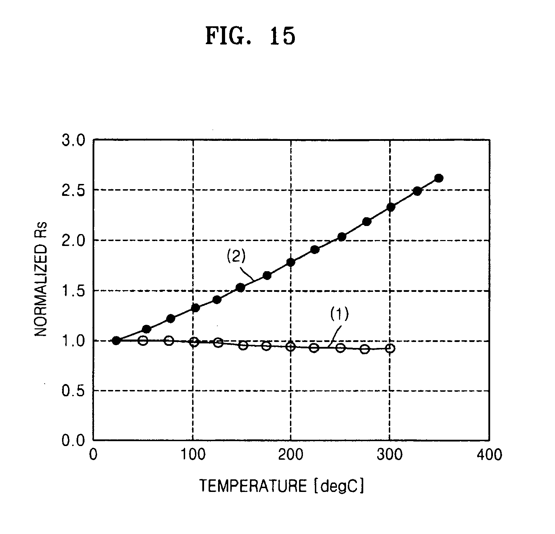

FIG. 15 is a graph showing a resistance value with respect to temperature in a nickel iron (NiFe) device that is used as the sensor 6J installed in slider 20. FIG. 15 illustrates both a changing characteristic plot 2 of the resistance value of the NiFe device according to temperature, and a changing characteristic plot 1 of a resistance value of a tungsten (Tu) MR device according to temperature. Referring to FIG. 15, it is seen that the resistance value of the NiFe device changes according to temperature. In some embodiments, this characteristic of the NiFe device is used to determine a touch-down of head 16. This will be described in detail later.

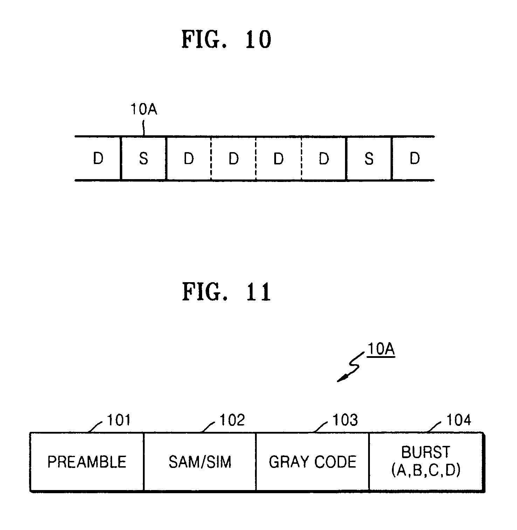

Referring back to FIG. 3, typically, data is stored in annular tracks 34 of disk 12. Each of the annular tracks 34 includes a plurality of sectors. FIG. 10 is a diagram illustrating an example embodiment of a composition of sectors in one track.

As shown in FIG. 10, each track includes servo information fields S where servo information is stored and data sectors D where data is stored. A plurality of data sectors D may be included between the servo information fields S. Alternatively, a single data sector D may be included between the servo information fields S. Also, a servo information field 10A may store signals as shown in FIG. 11.

FIG. 11 is a diagram illustrating an example embodiment of a structure of servo information field 10A shown in FIG. 10. As shown in FIG. 11, a preamble 101, a servo synchronization indicating signal 102, a gray code 103, and a burst signal 104 are recorded on servo information field 10A.

Preamble 101 provides clock synchronization while reading servo information, and also provides a uniform timing margin by providing a gap in front of a servo sector. Also, preamble 101 is used to determine a gain of an automatic gain control (AGC) circuit.

Servo synchronization indication signal 102 includes a servo address mark (SAM) and a servo index mark (SIM). The SAM is a signal indicating a beginning of a sector, and the SIM is a signal indicating a beginning of a first sector in annular track 34.

Gray code 103 provides track information, and burst signal 104 is a signal used to control head 16 to follow the center of annular track 34. Burst signal 104 may include 4 patterns, such as A, B, C, and D, and these 4 patterns may be combined to generate a position error signal (PES) used while controlling head 16 to follow the center of annular track 34.

Referring back to FIG. 3, a logic block address is allocated in a writable area of disk 12. The logic block address of the disk drive is converted to cylinder/head/sector information to designate the writable area of disk 12. Disk 12 is divided into a maintenance cylinder area that is not accessible by a user, and a data area that is accessible by the user. The maintenance cylinder area is also referred to as a system area. In the maintenance cylinder area, various types of information required to control the disk drive are stored, and in particular, information required to control the flying height of head 16 is stored.

Head 16 is moved across the surface of disk 12 to read data from or write data to various tracks. A plurality of code objects for enabling the disk drive to implement various functions may be stored in disk 12. For example, a code object for executing a MP3 player function, a code object for executing a navigation function, and a code object for executing various video games may be stored in disk 12.

Referring back to FIG. 1, storage medium I/F 140 allows processor 110 to access storage medium 150 to write or read data. In detail, storage medium I/F 140 in the data storage device, which may be implemented as a disk drive, includes a servo circuit for controlling head disk assembly 100 and a read/write channel circuit for processing a signal to read or write data.

Host I/F 160 performs data transmission/reception to/from host device 170, which may be a personal computer. Host I/F 160 may be any standardized interface, such as a serial advanced technology attachment (SATA) interface, a parallel advanced technology attachment (PATA) interface, or a universal serial bus (USB) interface.

External I/F 180 performs data transmission/reception to/from an external device via an input/output terminal installed in the data storage device. Examples of external I/F 180 include any standardized interface, such as an accelerated graphics port (AGP) interface, a USB interface, an IEEE1394 interface, a personal computer memory card international association (PCMCIA) interface, a local area network (LAN) interface, a Bluetooth interface, a high definition multimedia interface (HDMI), a programmable communication interface (PCI), an industry standard architecture (ISA) interface, a peripheral component interconnect-express (PCI-E) interface, an Express Card interface, an SATA interface, a PATA interface, or a serial interface.

Bus 190 transfers data between the elements of the data storage device.

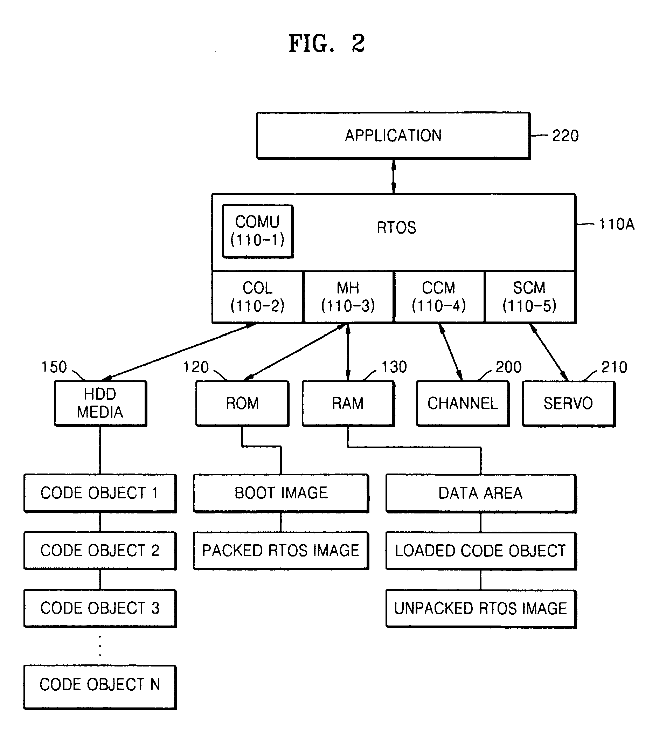

Hereinafter, a software operation system of a hard disk drive (HDD), which is an example of the data storage device, will be described with reference to FIG. 2.

FIG. 2 illustrates an example embodiment of a software operation system of the data storage device of FIG. 1. Referring to FIG. 2, a plurality of code objects 1 through N are stored in the storage medium 150 of the HDD.

In ROM 120, a boot image and a packed real time operating system (RTOS) image are stored.

In detail, the plurality of code objects 1 through N are stored in storage medium 150, e.g., a disk, of the HDD. The code objects 1 through N stored in the disk may include not only code objects required for operating the disk drive but also code objects relevant to various extendible functions of the disk drive. In particular, the code objects for executing the method of detecting a touch-down of a head and the method of adjusting a head flying height by using the method of detecting a touch-down of a head illustrated in FIGS. 12 through 14 are also stored in the disk. Alternatively, the code objects for executing the methods illustrated in FIGS. 12 through 14 may also be stored in ROM 120, instead of the disk used as storage medium 150 of the HDD. Also, code objects for executing various functions such as a MP3 player function, a navigation function, a video game function, or the like may also be stored in the disk.

An unpacked RTOS image obtained by reading a boot image from ROM 120 is loaded into RAM 130 while booting the disk drive. Then, code objects required for operating host I/F 160 and external I/F 180 and stored in storage medium 150 of the HDD are loaded into RAM 130. Obviously, a data area for storing data is also allocated in RAM 130.

Circuits required for processing a signal to read or write data are installed in a channel circuit 200, and circuits required for controlling head disk assembly 100 to read or write data are installed in a servo circuit 210.

An RTOS 110A is a real-time operation system program, e.g., a multiple program operating system using a disk. Depending on tasks, real-time multi-processing is performed on relatively high priority foreground tasks, and batch-processing is performed on relatively low priority background tasks. In addition, RTOS 110A loads code objects to the disk or unloads code objects therefrom.

RTOS 110A manages a code object management unit (COMU) 110-1, a code object loader (COL) 110-2, a memory handler (MH) 110-3, a channel control module (CCM) 110-4, and a servo control module (SCM) 110-5 to execute tasks according to requested commands. Also, RTOS 110A manages application programs 220.

In detail, RTOS 110A loads into RAM 130 code objects required for controlling the disk drive when the disk drive is booted. Thus, after the execution of the booting process, the disk drive may be operated by using the code objects loaded into RAM 130.

COMU 110-1 stores position information about where code objects are written, converts virtual addresses into actual addresses, and performs a bus arbitration process. COMU 110-1 also stores information about priorities of tasks being executed. COMU 110-1 also manages task control block (TCB) information and stack information required for executing tasks regarding code objects.

COL 110-2 loads the code objects stored in storage medium 150 of the HDD into RAM 130 by using COMU 110-1, or unloads the code objects stored in RAM 130 to storage medium 150 of the HDD. Thus, COL 110-2 may load the code objects for executing the methods of FIGS. 12 through 14 and stored in storage medium 150 of the HDD into RAM 130.

Thus, RTOS 110A may execute the methods of FIGS. 12 through 14 by using the code objects loaded into RAM 130, which will be described below.

MH 110-3 writes data to or reads data from ROM 120 or RAM 130.

CCM 110-4 performs channel control required for processing a signal to write or read data. SCM 110-5 controls a servo system, including the head disk assembly 100 for reading/writing data.

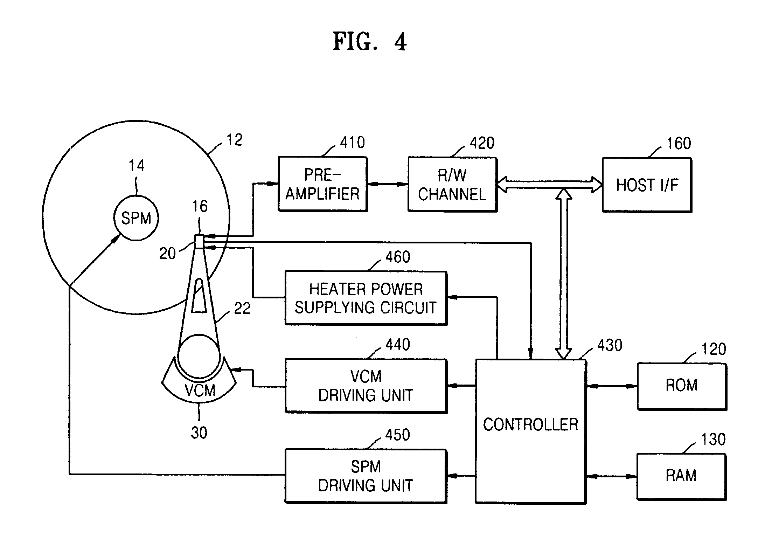

FIG. 4 illustrates an example embodiment of a configuration of a disk drive, as an example of the data storage device of FIG. 1.

Referring to FIG. 4, the disk drive includes a pre-amplifier 410, a read/write (R/W) channel 420, a controller 430, a voice coil motor (VCM) driving unit 440, a spindle motor (SPM) driving unit 450, a heater power supplying circuit 460, ROM 120, RAM 130, and host I/F 160.

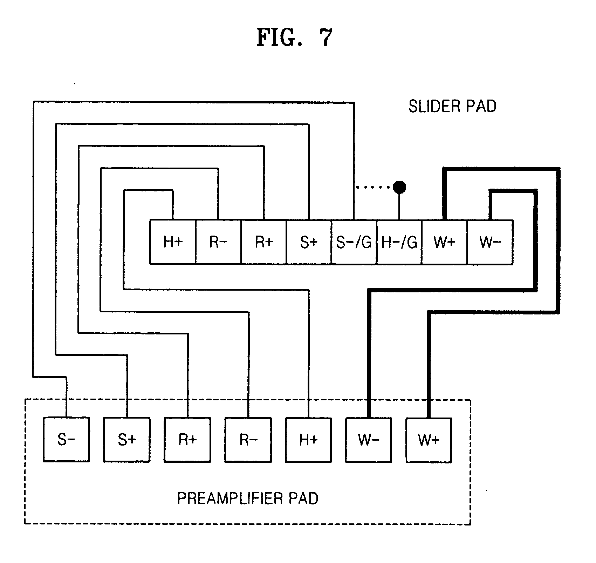

FIG. 7 is a wiring diagram of an example embodiment of pads of slider 20 and pre-amplifier 410 in the disk drive wherein a connection relationship of electrical signals are shown. Slider 20 includes two pads H+ and H-/G that are respectively connected to two terminals of the heater 6I, 2 pads W+ and W- that are connected to the coil 6H of the writing element 16-2, 2 pads R+ and R- that are respectively connected to two terminals of the MR device 6D of reading element 16-1, and two pads S+ and S-/G that are respectively connected to 2 terminals of the sensor 6J. Here, the pads H-/G and S-/G may be integrated into a single pad as a ground terminal.

Heater power supplying circuit 460 supplies power corresponding to a FOD DAC value applied from controller 430 to a heater installed on head 16. Here, the FOD DAC value is a control signal for adjusting the head flying height, and determines the amplitude of a voltage or current applied to the heater of head 16.

Heater power supplying circuit 460 generates a current according to the FOD DAC value and supplies the generated current to the heater 6I installed on slider 20 in an FOD on mode, and blocks the current supplied to the heater 6I in an FOD off mode.

Controller 430 may be a digital signal processor (DSP), a microprocessor, a microcontroller, a processor, or the like. Controller 430 controls R/W channel 420 to read data from disk 12 or to write data to disk 12 according to a command received from the host device 170 via host I/F 160.

Controller 430 is coupled to VCM driving unit 440, which supplies a driving current to drive VCM 30. Controller 430 supplies a control signal to VCM driving unit 440 to control movement of head 16.

Also, controller 430 is coupled to SPM driving unit 450, which supplies a driving current for driving SPM 14. When power is supplied to controller 430, controller 430 supplies a control signal to SPM driving unit 450 to rotate SPM 14 at a target speed.

Controller 430 is connected to heater power supplying circuit 460, and generates an FOD DAC, i.e., a control signal for determining the amplitude of a voltage or current to be supplied to the heater 6I installed in slider 20.

Controller 430 is coupled to ROM 120 and RAM 130. In ROM 120, firmware and control data for controlling the disk drive are stored. Also, in some embodiments program codes and data for executing the methods of FIGS. 12 through 14 may be stored in ROM 120. However, the program codes and data for executing the methods of FIGS. 12 through 14 may also be stored in the maintenance cylinder area of the disk 12, instead of in ROM 120.

Controller 430 may load the program codes and data for executing the methods stored in ROM 120 or disk 12 into RAM 130, and may control the elements of the disk drive to execute those methods by using the program codes and data loaded into RAM 130.

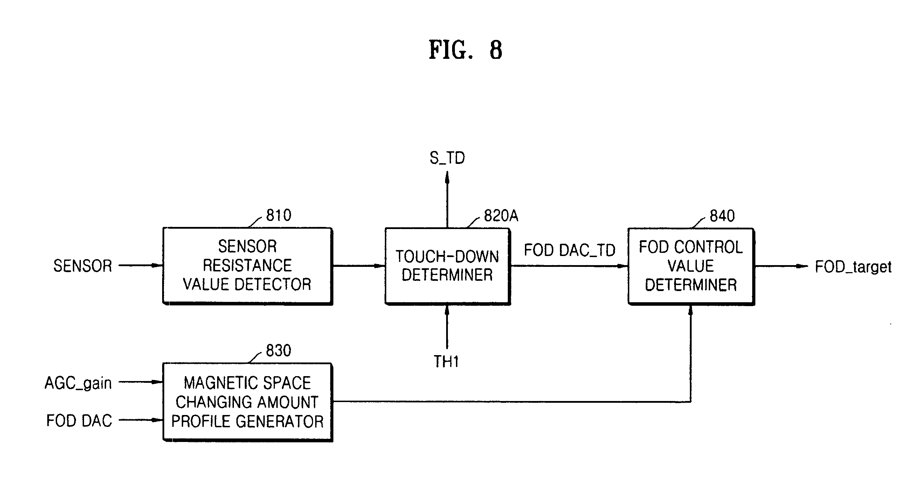

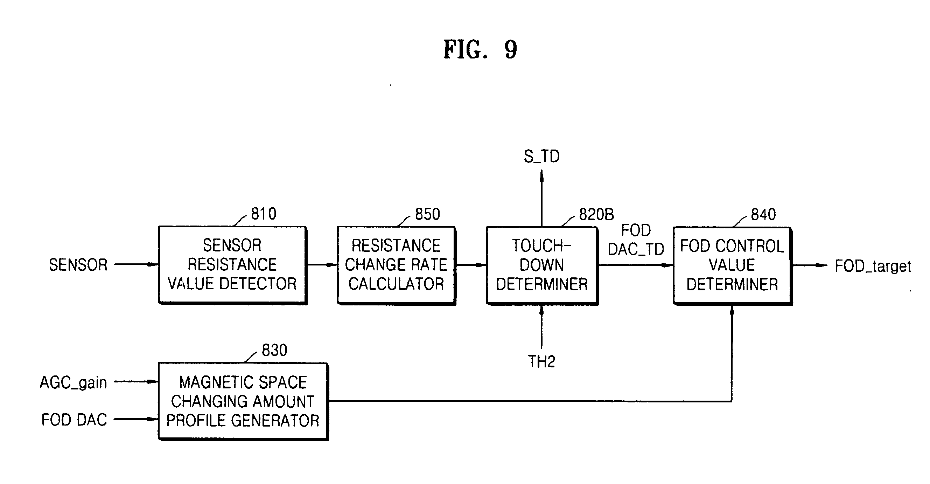

Also, controller 430 may be designed to electrically connect to the sensor 6J of slider 20, and to embed a circuit of an apparatus for adjusting a head flying height, according to an embodiment as illustrated in FIG. 8 or 9. Alternatively, the circuit of the apparatus of FIG. 8 or 9 may be separated from controller 430.

First, a data read operation and a data write operation in a general disk drive will be described below.

In a data read mode, pre-amplifier 410 amplifies an electrical signal sensed from disk 12 by head 16. Then, R/W channel 420 amplifies the electrical signal output from the pre-amplifier 410 by using an automatic gain control circuit (not shown) that automatically varies a gain according to an amplitude of the electrical signal, converts the electrical signal into a digital signal, and then decodes the digital signal to detect data. For example, an error correction process may be performed on the detected data by controller 430 by using a Reed-Solomon code, which is an error correcting code, and then the detected data may be converted into stream data and transmitted to host device 170 via host I/F 160.

Next, in a write mode, the disk drive receives data from host device 170 via host I/F 160, and controller 430 adds an error correction symbol(s) using a Reed-Solomon code, and R/W channel 420 encodes the data to be suitable for a write channel. Then, the data is written to disk 12 by head 16 to which a write current amplified by pre-amplifier 410 is applied.

A method of detecting a touch-down of a head, and a method of adjusting a head flying height by using the method of detecting a touch-down of a head, will now be described in detail.

First, the method of detecting a touch-down of a head will be described.

In order for head disk assembly 100 of the disk drive to adjust the head flying height, i.e. an interval between head 16 and disk 12, to a target flying height, a point where head 16 reaches a touch-down location should be accurately detected through a touch-down test.

Accordingly, the sensor 6J having an electrical characteristic factor value, for example, a resistance value, that changes according to temperature is installed in slider 20, and the touch-down of head 16 is detected based on a change of the electric characteristic factor value of the sensor 6J of slider 20.

Embodiments of an apparatus for adjusting a head flying height, will now be described.

FIGS. 8 and 9 are structural diagrams each illustrating an example embodiment of an apparatus for adjusting a head flying height. The apparatuses of FIGS. 8 and 9 may be designed to be included in the processor 110 of FIG. 1 or controller 430 of FIG. 4, and in some cases, may be designed as one or more individual circuits.

According to an embodiment of the inventive concept, the apparatuses of FIGS. 8 and 9 are designed to be included in the processor 110 or the controller 430. For convenience of description, the apparatuses of FIGS. 8 and 9 are described here as being included in the controller 430.

The apparatus of FIG. 8 will now be described.

As shown in FIG. 8, the apparatus includes a sensor resistance value detector 810, a touch-down determiner 820A, a magnetic space changing amount profile generator 830, and an FOD control value determiner 840.

Sensor resistance value detector 810 detects a resistance value of the sensor 6J installed in slider 20 while performing a touch-down process of gradually decreasing a flying height of head 16. In other words, in a touch-down test mode for measuring a head flying height, controller 430 gradually increases FOD DAC values applied to heater power supplying circuit 460 until the touch-down is generated.

In such a touch-down test mode, sensor resistance value detector 810 measures a current I1 flowing through the sensor 6J while applying a constant voltage V1 between two terminals of the sensor 6J, and may detect a resistance value HDI_R of the sensor 6J by calculating V1/I1. In other words, referring to FIG. 7, the resistance value HDI_R of the sensor 6J may be detected by measuring the current I1 flowing through a conducting wire connecting the pad S+ and the sensor 6J, while connecting a voltage supply source (not shown) for generating the constant voltage V1 to the pads S+ and S-/G.

Alternatively, the sensor resistance value detector 810 may detect the resistance value HDI_R of the sensor 6J by measuring a voltage V2 across the two terminals of the sensor 6J while applying a constant current I2 to the sensor 6J, and calculating V2/I2. In other words, referring to FIG. 7, the resistance value HDI_R of the sensor 6J may be detected by measuring the voltage V2 between the pads S+ and S-/G while a current supply source (not shown) for generating the constant current I2 is connected in series between the pad S+ and the sensor 6J.

Touch-down determiner 820A compares the resistance value HDI_R of the sensor 6J detected by sensor resistance value detector 810 and a first threshold value TH1, and when the resistance value HDI_R is greater than or equal to the first threshold value TH1, generates a signal S_TD indicating that head 16 reached a touch-down location, and at the same time, determines FOD DAC a value FOD DAC_TD as a touch-down reference value. Here, the first threshold value TH1 is a threshold resistance value of the sensor 6J for determining a touch-down point of time at which slider 20 and disk 12 contact each other, and may be experimentally determined while developing the disk drive considering the resistance value changing characteristics of the sensor 6J according to temperature.

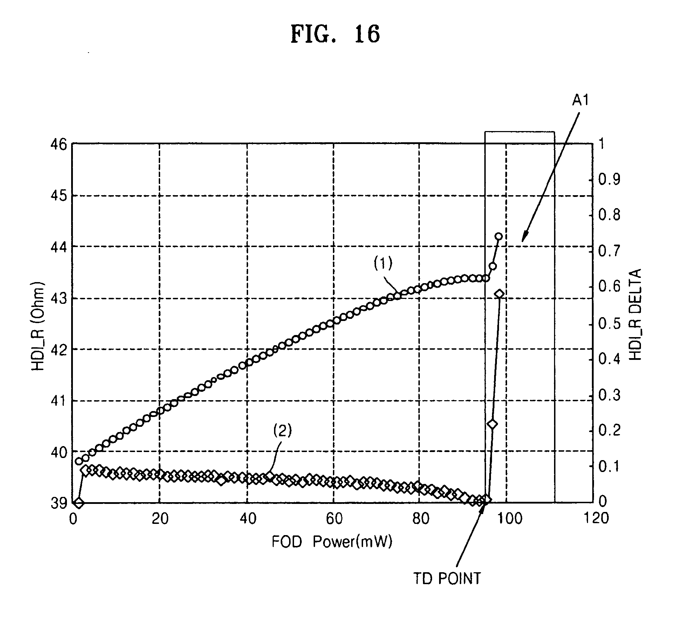

A method of determining the first threshold value TH1 will now be described in detail with reference to FIG. 16. FIG. 16 shows a plot (1) indicating a change of the resistance value HDI_R of the sensor 6J according to a value of power FOD POWER supplied to the heater 6I installed on slider 20. Looking at the plot (1) of FIG. 16, the resistance value HDI_R of the sensor 6J gradually increases as the value of the power FOD POWER increases, and the resistance value HDI_R remarkably increases in an area A1 after head 16 reaches a touch-down point TD POINT. Accordingly, the first threshold value TH1 may be determined by calculating an average value of the resistance value HDI_R of the sensor 6J at the touch-down point TD POINT obtained through a plurality of experiments.

In other words, the first threshold value TH1 may be determined by obtaining, through experimentation or simulation, the resistance value HDI_R of the sensor 6J when the resistance value HDI_R starts to remarkably increase. The first threshold value TH1 is set according to a temperature at which the disk drive is used.

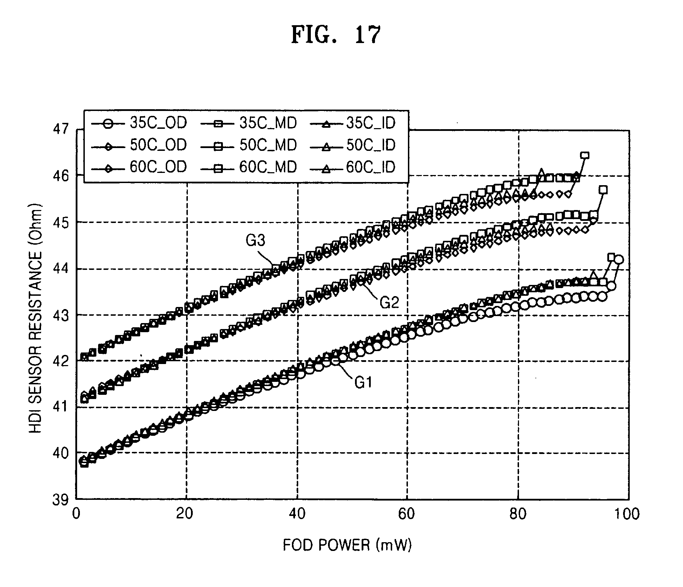

FIG. 17 is a graph showing change characteristics of the resistance value HDI_R of the sensor 6J according to the power FOD POWER supplied to the heater 6I, according to the temperature of the disk drive. In FIG. 17; a characteristic plot G1 shows the change characteristics of the resistance value HDI_R of the sensor 6J according to the power FOD POWER supplied to the heater 6I, in an inner diameter region ID, a center region MD, and an outer diameter region OD of the disk when the temperature of the disk drive is 35°C; a characteristic plot G2 shows the change characteristics of the resistance value HDI_R of the sensor 6J according to the power FOD POWER supplied to the heater 6I, in the inner diameter region ID, the center region MD, and the outer diameter region OD of the disk when the temperature of the disk drive is 50°C; and a characteristic plot G3 shows the change characteristics of the resistance value HDI_R of the sensor 6J according to the power FOD POWER supplied to the heater 6I, in the inner diameter region ID, the center region MD, and the outer diameter region OD of the disk when the temperature of the disk drive is 60°C.

Referring to FIG. 17, it is determined that the change characteristics of the resistance value HDI_R of the sensor 6J according to the power FOD POWER supplied to the heater 6I change according to the used temperature of the disk drive. Accordingly, the first threshold value TH1 is set differently according to the temperature of the disk drive. Also, the change characteristics of the resistance value HDI_R of the sensor 6J according to the power FOD POWER supplied to the heater 6I may somewhat different in different regions on the disk, but such a difference may be ignored. If such a difference is to be considered while designing the disk drive, the first threshold value TH1 may be experimentally determined according to disk zones or the inner diameter region ID, the center region MD, and the outer diameter region OD, based on the temperature.

When the first threshold value TH1 is determined according to the temperature of the disk drive, the touch-down determiner 820A selects the first threshold value TH1 corresponding to the temperature of the disk drive performing the touch-down test, and when the resistance value HDR_R of the sensor 6J detected by the sensor resistance value detector 810 is equal to or larger than the selected first threshold value TH1, generates the signal S_TD indicating that head 16 reached the touch-down location.

When the signal S_TD is generated, the touch-down process is completed.

Magnetic space changing amount profile generator 830 calculates a changing amount profile of a magnetic space between the head 16 and the disk 12 according to a change of the FOD DAC value. For example, the changing amount of magnetic space between head 16 and disk 12 may be used to obtain a profile of the flying height of head 16 on disk 12 according to a change of the FOD DAC value by using a well known Wallace spacing loss equation.

The Wallace spacing loss equation is shown as Equation 1 below.

[Equation 1]

$$\Delta d = (\lambda/2\pi)*Ls$$

Here, $\Delta d$ denotes a changing amount of a magnetic space between disk 12 and head 16, $\lambda$ denotes a recording wavelength, i.e., a linear speed/recording frequency, Ls denotes Ln(TAA1/TAA2), wherein Ln denotes a natural log, TAA1 denotes a previous AGC gain value, and TAA2 denotes a current AGC gain value.

Accordingly, the changing amount of magnetic space between disk 12 and head 16 with respect to a change of an AGC gain value AGC_gain may be obtained by using Equation 1. For reference, since the AGC gain values AGC_gain according to a change of the FOD DAC value are measured, a profile of the changing amount of the magnetic space between disk 12 and head 16 according to the change of the FOD DAC value may be obtained.

FOD control value determiner 840 determines a FOD DAC value (FOD_target) corresponding to a target reference height based on the profile obtained by magnetic space changing amount profile generator 830 based on the value FOD DAC_TD received from touch-down determiner 820A.

Accordingly, controller 430 controls the flying height of head 16 to reach the target flying height by applying the value FOD_target determined by FOD control value determiner 840 as the value of the FOD DAC.

FIG. 9 is a structural diagram of another example embodiment of an apparatus for adjusting a head flying height.

As shown in FIG. 9, the apparatus includes sensor resistance value detector 810, touch-down determiner 820B, magnetic space changing amount profile generator 830, the FOD control value determiner 840, and a resistance change rate calculator 850.

Sensor resistance value detector 810 detects a resistance value of the sensor 6J installed in slider 20 while performing a touch-down process of gradually decreasing a flying height of head 16. Since sensor resistance value detector 810 has been already described in detail with reference to FIG. 8, details thereof will not be repeated.

Resistance change rate calculator 850 calculates a resistance change rate HDI_R Delta of the sensor 6J with respect to a change of power supplied to the heater 6I installed in slider 20. In other words, the resistance change rate HDI_R Delta of the sensor 6J may be obtained by dividing a resistance change rate of the sensor 6J according to a change of the power supplied to the heater 6I by a changed amount of the power supplied to the heater 6I. Alternatively, the resistance change rate HDI_R Delta of the sensor 6J may be obtained by dividing a resistance change amount of the sensor 6J according to the change of the power supplied to the heater 6I by a changed amount of a FOD DAC value applied to heater power supplying circuit 460.

Touch-down determiner 820B compares the resistance change rate HDI_R Delta calculated by the resistance change rate calculator 850 and a second threshold value TH2, and when the resistance change rate HDI_R Delta is less than or equal to the second threshold value TH2, generates the signal S_TD indicating that head 16 reached the touch-down location. At the same time, the touch-down determiner 820B determines the value FOD DAC_TD of the applied FOD DAC as a touch-down reference value. Here, the second threshold value TH2 is a threshold resistance change rate of the sensor 6J for determining a touch-down point of time at which slider 20 and disk 12 contact each other, and may be experimentally determined while developing the disk drive considering the resistance value changing characteristics of the sensor 6J according to temperature.

A method of determining the second threshold value TH2 will now be described in detail with reference to FIG. 16. FIG. 16 shows a plot (2) indicating a resistance change rate HDI_R Delta of the sensor 6J according to change of the value of the power FOD POWER supplied to the heater 6I mounted on slider 20. Looking at the plot 2, the resistance change rate HDI_R Delta of the sensor 6J gradually decreases as the value of the power FOD POWER increases, the resistance change rate HDI_R Delta is zero when head 16 reaches a touch-down point, and the resistance change rate HDI_R Delta remarkably increases in an area A1 after the touch-down point. Accordingly, in this case, the second threshold value TH2 may be determined to be zero. For reference, when the value of the power FOD POWER supplied to the heater 6I is increased, the resistance of the sensor 6J increases, and when head 16 starts to approach disk 12, a cooling effect according to the rotation of the disk is generated, and thus the change rate of the resistance of the sensor 6J starts to decrease. After the change rate of the resistance of the sensor 6J is minimized, head 16 and disk 12 contact each other, and when head 16 and disk 12 contact each other, the change rate of the resistance of the sensor 6J remarkably increases.

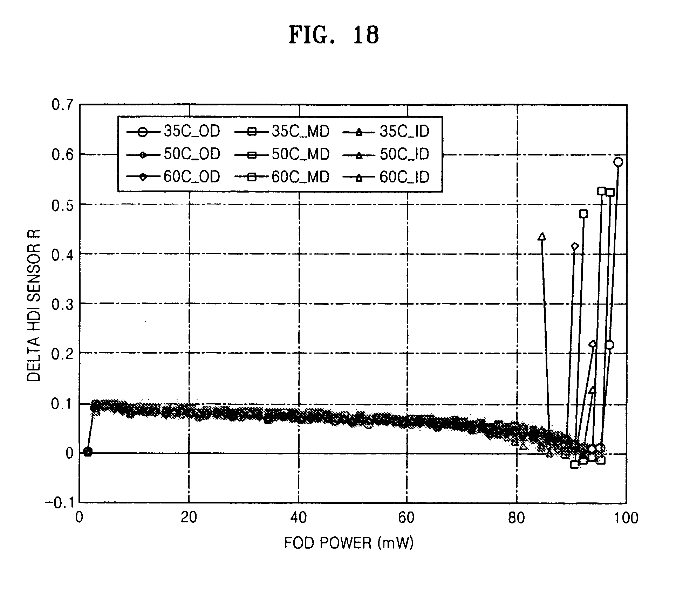

FIG. 18 is a graph showing characteristics of the resistance change rate HDI_R Delta of the sensor 6J according to the value of the power FOD POWER supplied to the heater 6I, in the inner diameter region ID, the center region MD, and the outer diameter region OD of the disk when the temperature of the disk drive is 35°C, 50°C, and 60°C, respectively. Referring to FIG. 18, it is determined that the touch-down occurs when the resistance change rate HDI_R Delta of the sensor 6J is near zero, regardless of the temperature and regions of the disk drive.

Magnetic space changing amount profile generator 830 calculates the profile of the changing amount of the magnetic space between head 16 and disk 12 according to the change of the FOD DAC value. Since operations of magnetic space changing amount profile generator 830 has been described in detail with reference to FIG. 8, details thereof will not be repeated.

FOD control value determiner 840 determines an FOD DAC value FOD_target corresponding to a target reference height from the profile obtained by the magnetic space changing amount profile generator 830 based on the value FOD DAC_TD received from the touch-down determiner 820B.

Accordingly, controller 430 may control the head flying height to reach the target flying height by applying the value FOD_target determined by FOD control value determiner 840 as the FOD DAC value.

Hereinafter, a method of detecting a touch-down of a head, and a method of adjusting a head flying height by using the method of detecting a touch-down of a head, will be described with reference to FIGS. 12 through 14, wherein the methods are performed by processor 110 of the data storage device of FIG. 1, or controller 430 of the disk drive of FIG. 4. For convenience of description, the methods are described here as being performed by the controller 430, but may be performed by some other device.

FIG. 12 is a flowchart illustrating an example embodiment of a method of adjusting a head flying height.

Controller 430 determines whether the disk drive is in a flying height (FH) measuring mode to measure a flying height of head 16, in operation S101. The FH measuring mode may be performed during a test process after assembling the disk drive.

If it is determined that the disk drive is in the FH measuring mode in operation S101, controller 430 changes an FOD control value (the FOD DAC value) so that the flying height of head 16 is gradually decreased in a disk zone to be measured, while performing a process of calculating the changing amount of magnetic space between head 16 and disk 12, in operation S102. In other words, according to a control of controller 430, the FOD DAC value applied to heater power supplying circuit 460 is gradually increased while obtaining a profile of the flying height of head 16 on disk 12 according to the change of the FOD DAC value by using Equation 1.

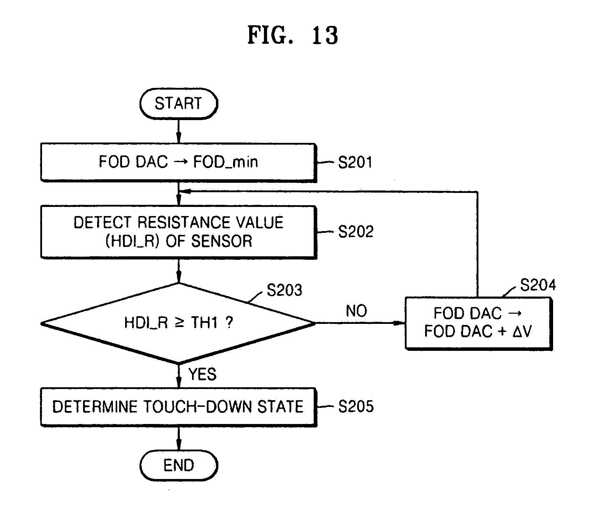

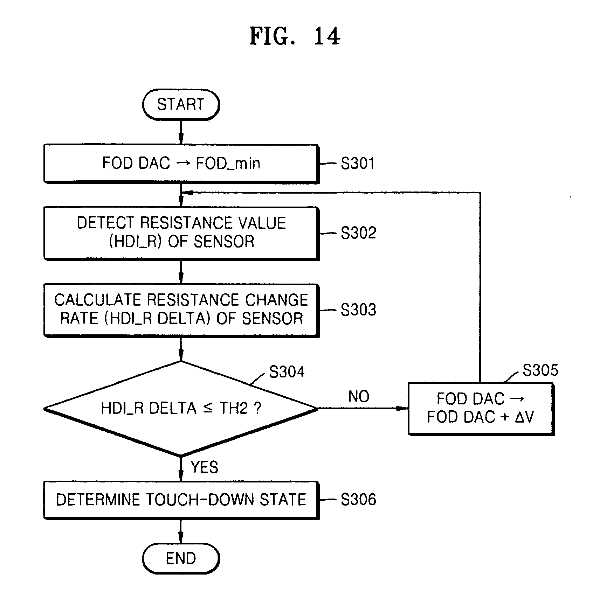

While repeating operation S102, it is determined whether a touch-down state where slider 20 contacts disk 12 is occurred, in operation S103. The method may detect a point of time when the touch-down state is generated, by using the sensor 6J installed in the slider 20. The sensor 6J includes a material having an electrical characteristic factor value that changes according to temperature. For example, the sensor 6J may use a device having a resistance value that changes according to temperature. In detail, a device including nickel iron (NiFe) may be used as the sensor 6J. The method of detecting the touch-down of head 16 by using the sensor 6J installed in slider 20 will be described in detail later with reference to FIGS. 13 and 14.

If it is determined in operation S103 that the touch-down state is generated, a FOD DAC value corresponding to a target flying height is determined as the FOD control value of a corresponding disk zone in operation S 104, based on the profile obtained in operation S102. In other words, the FOD DAC value corresponding to the target flying height is obtained from the profile obtained in operation S102 based on the FOD DAC value at the point of time when the touch-down is generated. Next, when the obtained FOD DAC value is applied to heater power supplying circuit 460, a pole tip of head 16 expands due to the heat generated in heater 6I installed in slider 20, and thus the flying height of head 16 is adjusted to be the target flying height.

Values of the FOD DAC corresponding to the target flying height may be obtained according to a zone or a region including a plurality of zones by performing such a method according to the zone or the region. When the method is performed according to the region including a plurality of zones, a FOD DAC value corresponding to a target flying height in a zone which is not measured may be estimated by using an interpolation or extrapolation method.

Methods of detecting a touch-down of a head according to embodiments of the inventive concept will now be described with reference to FIGS. 13 and 14.

FIG. 13 is a flowchart illustrating an example embodiment of a method of detecting a touch-down of a head.

In the method of FIG. 13, the touch-down is detected by using a change of the resistance value of the sensor 6J installed in slider 20 according to the change of the flying height of slider 20.

The controller 430 determines an initial value of a FOD DAC, i.e., a control signal for adjusting the flying height of head 16 in a touch-down test, to be a minimum value FOD_min, and applies the determined initial value to heater power supplying circuit 460 in operation S201. Here the minimum value FOD_min may be 0.

Then, in operation S202, controller 430 detects the resistance value of the sensor 6J installed in slider 20. For example, the resistance value HDI_R of the sensor 6J may be detected by measuring the current I1 flowing through the sensor 6J while applying the constant voltage V1 between the two terminals of the sensor 6J, and calculating V1/I1. Alternatively, the resistance value HDI_R of the sensor 6J may be detected by measuring the voltage V2 across the two terminals of the sensor 6J while the constant current I2 is applied to the sensor 6J, and calculating V2/I2.

Next, in operation 203, the controller 430 determines whether the resistance value HDI_R of the sensor 6J detected in operation S202 is greater than or equal to the first threshold value TH1. Here, the first threshold value TH1 may be experimentally determined to be a resistance value HDI_R of the sensor 6J at a point of time when the resistance value HDI_R starts to remarkably increase, from a curve showing a change of the resistance value HDI_R of the sensor 6J according to the value of the power FOD POWER supplied to the heater 6I.

When it is determined in operation S203 that the resistance value HDI_R of the sensor 6J is less than the first threshold value TH1, then in operation 204 a current FOD DAC value is increased by ∆V, and then operation S202 is again performed. Here, ∆V denotes a unit increment of a control signal for adjusting the head flying height.

When it is determined in operation 203 that the resistance value HDI_R of the sensor 6J is greater than or equal to the first threshold value TH1, then in operation 205 it is determined that head 16 is in the touch-down state. In other words, head 16 is determined to have touched down if the resistance value HDI_R of the sensor 6J is greater than or equal to the first threshold value TH1, and thus the signal S_TD indicating that head 16 is in the touch-down state is generated, and at the same time, the FOD DAC_TD applied FOD DAC value is determined to be a touch-down reference value.

FIG. 14 is a flowchart illustrating another example embodiment of a method of detecting a touch-down of a head.

The method of FIG. 14 uses a change rate of the resistance value HDI_R of the sensor 6J installed in slider 20 according to the change of the flying height of slider 20.

Controller 430 determines an initial FOD DAC value, i.e., a control signal for adjusting the flying height of head 16 in a touch-down test, to be a minimum value FOD_min, and applies the determined initial value to the heater power supplying circuit 460 in operation 301. Here the minimum value FOD_min may be 0.

Then, in operation S302, controller 430 detects the resistance value HDI_R of the sensor 6J installed in slider 20,. For example, the resistance value HDI_R of the sensor 6J may be detected by measuring the current I1 flowing through the sensor 6J while applying the constant voltage V1 between the two terminals of the sensor 6J, and calculating V1/I1. Alternatively, the resistance value HDI_R of the sensor 6J may be detected by measuring the voltage V2 across the two terminals of the sensor 6J while applying the constant current I2 to the sensor 6J, and calculating V2/I2.

Next, in operation S303 controller 430 calculates a resistance change rate HDI_R Delta of the sensor 6J with respect to power supplied to the heater 6I installed in slider 20. In other words, the resistance change rate HDI_R may be obtained by dividing the resistance change amount according to a changing amount ∆V of the FOD DAC value by a changing amount of power supplied to the heater 6I. Alternatively, the resistance change rate HDI_R Delta may be obtained by directly dividing the resistance changing amount of the sensor 6J according to the changing amount ∆V of the FOD DAC value by the changing amount ∆V of the FOD DAC value applied to heater power supplying circuit 460.

Then, in operation S304, controller 430 determines whether the resistance change rate HDI_R Delta of the sensor 6J is less than or equal to the second threshold value TH2. Here, the second threshold value TH2 may be experimentally determined to be zero based on the fact that the resistance change rate HDI_R Delta of the sensor 6J is zero at a touch-down point of head 16 from a plot showing a change rate of the resistance value HDI_R of the sensor 6J according to the value of the power FOD POWER supplied to the heater 6I.

If in operation S304 the resistance change rate HDI_R Delta is determined to be greater than the second threshold value TH2, then in operation S305 the current FOD DAC value is increased by ∆V, and then operation S302 is again performed.

If the resistance change rate HDI-R Delta is determined in operation S304 to be less than or equal to the second threshold value TH2, the in operation S306 it is determined that head 16 is in the touch-down state. In other words, head 16 is determined to have touched down if the resistance value HDI_R is greater than or equal to the second threshold value TH2, and thus the signal S_TD indicating that head 16 is in the touch-down state is generated, and at the same time, the FOD DAC value FOD DAC_TD is determined to be a touch-down reference value.

Accordingly, the touch-down point of head 16 may be accurately detected by using the change, or change rate, of the resistance value of the sensor 6J installed in slider 20 according to the flying height of head 16, wherein the resistance value of the sensor 6J changes according to the temperature.

The inventive concept may be executed as a method, a device, a system, or the like. When the method is executed as software, elements of the inventive concept are code segments executing operations that are necessarily required. Programs or code segments may be stored in a processor readable medium.

While the inventive concept has been particularly shown and described with reference to exemplary embodiments thereof, the exemplary embodiments should be considered in a descriptive sense only, and not for purposes of limitation. Thus, it will be understood by those of ordinary skill in the art that various changes in form and details may be therein without departing from the scope of the inventive concept as defined by the appended claims. Therefore, the scope of the inventive concept is defined not by the detailed description of the inventive concept but by the appended claims, and all differences within the scope will be construed as being included in the inventive concept.

**Claims**

1. A method of detecting a touch-down of a head (16) on a rotating disk (12), the method comprising:

   detecting a change of a resistance value of a sensor (6J) installed in a slider (20), wherein the resistance value changes according to temperature; and
   determining that the head flying height has reached a touch-down flying height if the detected change of the resistance value reaches a threshold value, wherein the threshold value is set differently according to a temperature of the disk drive.

2. The method of claim 1, wherein the sensor comprises a device comprising nickel iron, NiFe.

3. The method of claim 1, wherein the sensor is installed in a location nearest to a surface of the disk.

4. The method of claim 1, wherein the change of the resistance value is calculated by measuring a current flowing in the sensor while applying a constant voltage to the sensor.

5. The method of claim 1, wherein the change of the resistance value is calculated by measuring a voltage between two terminals of the sensor while applying a constant current to the sensor.

6. The method of claim 1, wherein the head flying height changes according to a power supplied to a heater (61) installed in the slider.

7. The method of claim 1, wherein detecting a change of a resistance value comprises:

   gradually lowering the head flying height by changing a value of a first signal for adjusting the head flying height on the rotating disk; and
   detecting a change of a resistance value of the sensor according to the change of the value of the first signal.

8. The method of claim 1, further comprising adjusting a head (16) flying height on a rotating disk (12) by:

   changing a value of a first signal for adjusting the head flying height on the rotating disk and calculating a magnetic space changing amount profile between the head and the rotating disk according to the change of the value of the first signal; and
   determining a value of the first signal corresponding to a target flying height from the calculated magnetic space changing amount profile between the head and the rotating disk based on a value of the first signal at the determined point of time when the head touches down the rotating disk.

9. The method of claim 8, wherein the first signal comprises a signal for determining an intensity of power supplied to a heater (61) installed in the slider.

10. A disk drive comprising:

    a disk (12) for storing information;
    a slider (20) in which a heater (6I), a sensor (6J) having a resistance value that changes according to temperature, and a head for recording information on the disk or reading information from the disk are installed; and **characterized by** comprising:

    a controller (430) for detecting a change of the resistance value of the sensor according to a change of a value of a first signal for adjusting power supplied to the heater, and for controlling a head flying height by determining a point of time when the head touches down on the disk when the detected change of the resistance value of the sensor reaches a threshold value, wherein the threshold value is set differently according to a temperature of the disk drive.

11. The disk drive of claim 10, wherein the controller calculates a magnetic space changing amount profile between the head and the disk according to the change of the value of the first signal, and determines a value of the first signal corresponding to a target flying height of the head from the calculated magnetic space changing amount profile between the head and the disk based on a value of the first signal at the point of time when the head touches down on the disk.

12. The disk drive of claim 10, wherein the slider comprises pads for electrically connecting the heater, the sensor, and the head to a preamplifier circuit.

13. The disk drive of claim 12, wherein the pads comprise first and second pads connected to the heater, third and fourth pads connected to the sensor, fifth and sixth pads connected to a writing element included in the head, and seventh and eighth pads connected to a reading element included in the head.

14. The disk drive of claim 10, wherein the sensor comprises a device comprising nickel iron, NiFe.

15. A tangible computer readable recording medium having recorded thereon a program for executing a method of detecting a touch-down of a head, the method comprising:

> detecting a change of a resistance value of a sensor (6J) installed in a slider (20), wherein the resistance value changes according to temperature; and
> determining that the head flying height reached a touch-down flying height if the detected change of the resistance value reaches a threshold value, wherein the threshold value is set differently according to a temperature of the disk drive.

**Patentansprüche**

1. Verfahren zum Erfassen eines Aufsetzens eines Kopfes (16) auf einer sich drehenden Platte (12), wobei das Verfahren umfasst:

> Erfassen einer Änderung eines Widerstandswertes eines in einem Slider (20) installierten Sensors (6J), wobei sich der Widerstandswert entsprechend der Temperatur ändert; und
> Feststellen, dass die Flughöhe des Kopfes eine Aufsetz-Flughöhe erreicht hat, wenn die erfasste Änderung des Widerstandswertes einen Schwellenwert erreicht, wobei der Widerstandswert entsprechend einer Temperatur des Platten-Laufwerks unterschiedlich eingestellt wird.

2. Verfahren nach Anspruch 1, wobei der Sensor eine Einrichtung umfasst, die Nickel-Eisen (NiFe) umfasst.

3. Verfahren nach Anspruch 1, wobei der Sensor an einer Position installiert ist, die sich am nächsten an einer Oberfläche der Platte befindet.

4. Verfahren nach Anspruch 1, wobei die Änderung des Widerstandswertes berechnet wird, indem ein Strom gemessen wird, der in dem Sensor fließt, während eine konstante Spannung an den Sensor angelegt wird.

5. Verfahren nach Anspruch 1, wobei die Änderung des Widerstandswertes berechnet wird, indem eine Spannung zwischen zwei Anschlüssen des Sensors gemessen wird, während ein konstanter Strom an den Sensor angelegt wird.

6. Verfahren nach Anspruch 1, wobei sich die Flughöhe des Kopfes entsprechend einer Leistung ändert, die einer in dem Slider installierten Heizeinrichtung (6I) zugeführt wird.

7. Verfahren nach Anspruch 1, wobei Erfassen einer Änderung eines Widerstandswertes umfasst:

> allmähliches Verringern der Flughöhe des Kopfes durch Ändern eines Wertes eines ersten Signals zum Regulieren der Flughöhe des Kopfes auf der sich drehenden Platte; und
> Erfassen einer Änderung eines Widerstandswertes des Sensors entsprechend der Änderung des Wertes des ersten Signals.

8. Verfahren nach Anspruch 1, das des Weiteren umfasst, dass eine Flughöhe eines Kopfes (16) auf einer sich drehenden Platte (12) reguliert wird, indem:

> ein Wert eines ersten Signals zum Regulieren der Flughöhe des Kopfes auf der sich drehenden Platte geändert wird und ein Profil des Maßes einer Änderung eines magnetischen Bereichs zwischen dem Kopf und der sich drehenden Platte entsprechend der Änderung des Wertes des ersten Signals berechnet wird; und
> ein Wert des ersten Signals, der einer Soll-Flughöhe entspricht, aus dem berechneten Profil der Änderung des Maßes der Änderung des magnetischen Bereichs zwischen dem Kopf und der sich drehenden Platte auf Basis eines Wertes des ersten Signals zu dem bestimmten Zeitpunkt bestimmt wird, zu dem der Kopf auf der sich drehenden Platte aufsetzt.

9. Verfahren nach Anspruch 8, wobei das erste Signal ein Signal zum Bestimmen einer Stärke einer in dem Slider installierten Heizeinrichtung (6I) zugeführten Leistung umfasst.

10. Platten-Laufwerk, das umfasst:

> eine Platte (12) zum Speichern von Informationen;
> einen Slider (20), in dem eine Heizeinrichtung (6I), ein Sensor (6J), der einen Widerstandswert hat, der sich entsprechend der Temperatur ändert, und ein Kopf zum Aufzeichnen von Informationen auf der Platte oder zum Lesen von Informationen von der Platte installiert sind; und,
> **dadurch gekennzeichnet, dass** es umfasst:
>
> > eine Steuereinrichtung (430), mit der eine Änderung des Widerstandswertes des Sensors entsprechend einer Änderung eines Wertes eines ersten Signals zum Regulieren der Heizeinrichtung (61) zugeführter Leistung erfasst wird, und eine Flughöhe des Kopfes gesteuert wird, indem ein Zeitpunkt bestimmt wird, zu dem der Kopf auf der Platte aufsetzt, wenn die erfasste Änderung des Widerstandswertes des Sensors einen Schwellenwert erreicht, wobei der Schwellenwert entsprechend einer Temperatur des Platten-Laufwerk unterschiedlich eingestellt wird.

11. Platten-Laufwerk nach Anspruch 10, wobei die Steuereinrichtung ein Profil des Maßes einer Änderung eines magnetischen Bereichs zwischen dem Kopf und der Platte entsprechend der Änderung des Wertes des ersten Signals berechnet und einen Wert des ersten Signals entsprechend einer Soll-Flughöhe des Kopfes aus dem berechneten Profil des Maßes der Änderung des magnetischen Bereichs zwischen dem Kopf und der Platte auf Basis eines Wertes des ersten Signals zu dem Zeitpunkt bestimmt, zu dem der Kopf auf der Platte aufsetzt.

12. Platten-Laufwerk nach Anspruch 10, wobei der Slider Anschlussstellen zum elektrischen Verbinden der Heizeinrichtung, des Sensors sowie des Kopfes mit einer Vorverstärkerschaltung umfasst.

13. Platten-Laufwerk nach Anspruch 12, wobei die Anschlussstellen eine erste und eine zweite Anschlussstelle, die mit der Heizeinrichtung verbunden sind, eine dritte und eine vierte Anschlussstelle, die mit dem Sensor verbunden sind, eine fünfte und eine sechste Anschlussstelle, die mit einem in dem Kopf enthaltenen Schreibelement verbunden sind, sowie eine siebte und eine achte Anschlussstelle umfassen, die mit einem in dem Kopf enthaltenen Leseelement verbunden sind.

14. Platten-Laufwerk nach Anspruch 10, wobei der Sensor eine Einrichtung umfasst, die Nickel-Eisen (Ni-Fe) umfasst.

15. Physisches computerlesbares Speichermedium, auf dem ein Programm zum Ausführen eines Verfahrens zum Erfassen eines Aufsetzens eines Kopfes aufgezeichnet ist, wobei das Verfahren umfasst:

Erfassen einer Änderung eines Widerstandswertes eines in einem Slider (20) installierten Sensors (6J), wobei sich der Widerstandswert entsprechend der Temperatur ändert; und Feststellen, dass die Flughöhe des Kopfes eine Aufsetz-Flughöhe erreicht hat, wenn die erfasste Änderung des Widerstandswertes einen Schwellenwert erreicht, wobei der Widerstandswert entsprechend einer Temperatur des Platten-Laufwerks unterschiedlich eingestellt wird.

**Revendications**

1. Procédé de détection de l'atterrissage d'une tête (16) sur un disque rotatif (12), le procédé comprenant :

la détection d'une variation d'une valeur de résistance d'un capteur (6J) installé dans un glisseur (slider) (20), dans lequel la valeur de résistance varie en fonction de la température ; et la détermination du fait que la hauteur de vol de la tête a atteint une hauteur de vol d'atterrissage si la variation détectée de la valeur de résistance atteint une valeur de seuil, dans lequel la valeur de seuil est fixée différemment en fonction d'une température du lecteur de disque.

2. Procédé selon la revendication 1, dans lequel le capteur comprend un dispositif comprenant du fer au nickel, NiFe.

3. Procédé selon la revendication 1, dans lequel le capteur est installé à un emplacement le plus proche d'une surface du disque.

4. Procédé selon la revendication 1, dans lequel la variation de la valeur de résistance est calculée en mesurant un courant circulant dans le capteur lorsqu'on applique au capteur une tension constante.

5. Procédé selon la revendication 1, dans lequel la variation de la valeur de résistance est calculée en mesurant une tension entre deux bornes du capteur lorsqu'on applique au capteur un courant constant.

6. Procédé selon la revendication 1, dans lequel la hauteur de vol de la tête varie en fonction d'une puissance fournie à un dispositif de chauffage (61) installé dans le glisseur.

7. Procédé selon la revendication 1, dans lequel la détection d'une variation d'une valeur de résistance comprend :

la diminution progressive de la hauteur de vol de la tête en modifiant une valeur d'un premier signal pour régler la hauteur de vol de la tête sur le disque rotatif ; et la détection d'une variation d'une valeur de résistance du capteur en fonction de la variation de la valeur du premier signal.

8. Procédé selon la revendication 1, comprenant en outre le réglage d'une hauteur de vol de la tête (16) sur un disque rotatif (12) par :

modification d'une valeur d'un premier signal pour régler la hauteur de vol de la tête sur le disque rotatif et calcul d'un profil de quantité de variation d'un espace magnétique entre la tête et le disque rotatif en fonction de la variation de la valeur du premier signal ; et

détermination d'une valeur du premier signal correspondant à une hauteur de vol cible d'après le profil de quantité de variation de l'espace magnétique entre la tête et le disque rotatif, en se basant sur une valeur du premier signal à l'instant déterminé où la tête atterrit sur le disque rotatif.

9. Procédé selon la revendication 8, dans lequel le premier signal est constitué d'un signal pour déterminer une intensité de puissance fournie à un dispositif de chauffage (61) installé dans le glisseur.

10. Lecteur de disque comprenant :

un disque (12) destiné à stocker des informations ;
un glisseur (slider) (20) dans lequel sont installés un dispositif de chauffage (61), un capteur (6J) ayant une valeur de résistance qui varie en fonction de la température et une tête pour enregistrer des informations sur le disque ou lire des informations sur le disque ; et
**caractérisé en ce qu'**il comprend :

un contrôleur (430) pour détecter une variation de la valeur de résistance du capteur en fonction de la variation d'une valeur d'un premier signal pour régler une puissance fournie au dispositif de chauffage et pour commander une hauteur de vol de la tête en déterminant un instant où la tête atterrit sur le disque lorsque la variation détectée de la valeur de résistance du capteur atteint une valeur de seuil, la valeur de seuil étant fixée différemment en fonction d'une température du lecteur de disque.

11. Lecteur de disque selon la revendication 10, dans lequel le contrôleur calcule un profil de quantité de variation d'un espace magnétique entre la tête et le disque en fonction de la variation de la valeur du premier signal, et détermine une valeur du premier signal correspondant à une hauteur de vol cible de la tête d'après le profil calculé de variation de l'espace magnétique entre la tête et le disque, en se basant sur une valeur du premier signal à l'instant déterminé où la tête atterrit sur le disque rotatif.

12. Lecteur de disque selon la revendication 10, dans lequel le glisseur comprend des plots pour réaliser une connexion électrique du dispositif de chauffage, du capteur et de la tête vers un circuit préamplificateur.

13. Lecteur de disque selon la revendication 12, dans lequel les plots comprennent des premier et deuxième plots connectés au dispositif de chauffage, des troisième et quatrième plots connectés au capteur, des cinquième et sixième plots connectés à un élément d'écriture inclus dans la tête et des septième et huitième plots connectés à un élément de lecture inclus dans la tête.

14. Lecteur de disque selon la revendication 10, dans lequel le capteur comprend un dispositif comprenant du fer au nickel, NiFe.

15. Support d'enregistrement tangible lisible par un ordinateur sur lequel est enregistré un programme pour exécuter un procédé de détection de l'atterrissage d'une tête, le procédé comprenant :

la détection d'une variation d'une valeur de résistance d'un capteur (6J) installé dans un glisseur (slider) (20), dans lequel la valeur de résistance varie en fonction de la température ; et
la détermination du fait que la hauteur de vol de la tête a atteint une hauteur de vol d'atterrissage si la variation détectée de la valeur de résistance atteint une valeur de seuil, dans lequel la valeur de seuil est fixée différemment en fonction d'une température du lecteur de disque.

FIG. 1

```
                              ┌─ 170
                        ┌──────────┐
                        │   HOST   │
                        └──────────┘
                             ↕
                              ┌─ 160
                        ┌──────────┐
                        │   HOST   │
                        │   I/F    │
                        └──────────┘
                             ↓
                              ┌─ 190
  ┌─ 120                ┌────────────────┐              ┌─ 180
┌────────┐             │    ┌─ 110      │          ┌──────────┐
│  ROM   │             │ ┌────────────┐ │          │ EXTERNAL │
└────────┘  ⟷          │ │ PROCESSOR  │ │    ↔     │   I/F    │
  ┌─ 130                │ └────────────┘ │          └──────────┘
┌────────┐             │                │
│  RAM   │             └────────────────┘
└────────┘                    ↕
                              ┌─ 140
                        ┌──────────┐
                        │  MEDIUM  │
                        │   I/F    │
                        └──────────┘
                             ↓
                              ┌─ 150
                        ┌──────────┐
                        │ STORAGE  │
                        │  MEDIUM  │
                        └──────────┘
```

# FIG. 2

```
                    ┌─────────────────────────────────┐
                    │          APPLICATION            │──220
                    └─────────────────────────────────┘
                                    ↕
        ┌───────────────────────────────────────────────────┐
        │  ┌──────────┐                                      │
        │  │  COMU    │            RTOS                      │──110A
        │  │ (110-1)  │                                      │
        │  └──────────┘                                      │
        ├──────────┬──────────┬──────────┬──────────────────┤
        │   COL    │    MH    │   CCM    │      SCM          │
        │ (110-2)  │ (110-3)  │ (110-4)  │    (110-5)        │
        └──────────┴──────────┴──────────┴──────────────────┘
```

150      120      130      200      210

| HDD MEDIA | ROM | RAM | CHANNEL | SERVO |
|---|---|---|---|---|

| CODE OBJECT 1 | BOOT IMAGE | DATA AREA |
|---|---|---|

| CODE OBJECT 2 | PACKED RTOS IMAGE | LOADED CODE OBJECT |
|---|---|---|

| CODE OBJECT 3 | | UNPACKED RTOS IMAGE |
|---|---|---|

⋮

| CODE OBJECT N |
|---|

# FIG. 3

**FIG. 4**

# FIG. 5

# FIG. 6

# FIG. 7

SLIDER PAD

| H+ | R− | R+ | S+ | S−/G | H−/G | W+ | W− |

PREAMPLIFIER PAD

| S− | S+ | R+ | R− | H+ | W− | W+ |

# FIG. 8

EP 2 385 523 B1

## FIG. 9

EP 2 385 523 B1

# FIG. 10

| D | S | D | D | D | D | S | D |
|---|---|---|---|---|---|---|---|

10A

# FIG. 11

10A

| PREAMBLE | SAM/SIM | GRAY CODE | BURST (A,B,C,D) |
|----------|---------|-----------|-----------------|
| 101      | 102     | 103       | 104             |

# FIG. 12

```
                    ( START )
                        |
                        v
         NO      /  IN FH MEASURING  \
    +----------<      MODE?           >----- S101
    |           \                   /
    |                 | YES
    |    +----------->|
    |    |            v
    |    |   +---------------------------+
    |    |   | CHANGE FOD CONTROL VALUE  |
    |    |   | WHILE CALCULATING CHANGING|
    |    |   | AMOUNT OF MAGNETIC SPACE  |----- S102
    |    |   | BETWEEN HEAD AND DISK     |
    |    |   +---------------------------+
    |    |            |
    |    |            v
    |    |  NO   /  TOUCH-DOWN      \
    |    +------<  STATE GENERATED?  >----- S103
    |           \                  /
    |                 | YES
    |                 v
    |       +-------------------------+
    |       | DETERMINE FOD CONTROL   |
    |       | VALUE CORRESPONDING     |----- S104
    |       | TO TARGET FH            |
    |       +-------------------------+
    |                 |
    +---------------->|
                      v
                  ( END )
```

# FIG. 13

```
                    ┌─────────┐
                    │  START  │
                    └────┬────┘
                         │
          ┌──────────────▼──────────────┐
          │   FOD DAC → FOD_min          │── S201
          └──────────────┬──────────────┘
                         │
          ┌──────────────▼──────────────┐
          │  DETECT RESISTANCE VALUE    │── S202
          │    (HDI_R) OF SENSOR         │
          └──────────────┬──────────────┘
                         │
                    S203 │                              S204
              ◇──────────▼──────────◇      NO    ┌──────────────┐
               <    HDI_R ≥ TH1 ?    >──────────▶│  FOD DAC →   │
              ◇─────────────────────◇           │ FOD DAC + ΔV │
                         │ YES                   └──────────────┘
          ┌──────────────▼──────────────┐
          │ DETERMINE TOUCH-DOWN STATE  │── S205
          └──────────────┬──────────────┘
                         │
                    ┌────▼────┐
                    │   END   │
                    └─────────┘
```

# FIG. 14

```
          ┌─────────────┐
          │    START    │
          └──────┬──────┘
                 │
                 ▼
     ┌───────────────────────┐
     │  FOD DAC → FOD_min     │── S301
     └───────────┬───────────┘
                 │                                          ┌──────────────────┐
                 ▼                                          │                  │
     ┌───────────────────────┐                             │                  │
     │  DETECT RESISTANCE VALUE │── S302                    │                  │
     │     (HDI_R) OF SENSOR    │                           │                  │
     └───────────┬───────────┘                             │                  │
                 │                                          │                  │
                 ▼                                          │                  │
     ┌───────────────────────┐                             │                  │
     │ CALCULATE RESISTANCE CHANGE │── S303                 │                  │
     │  RATE (HDI_R DELTA) OF SENSOR │                      │                  │
     └───────────┬───────────┘                             │                  │
                 │                          S304            │      S305        │
                 ▼                                          │   ┌──────────────┴──┐
              ╱─────────╲                      NO           │   │   FOD DAC →     │
          ╱─────────────────╲ ──────────────────────────────┘   │  FOD DAC + ΔV   │
          ╲ HDI_R DELTA ≤ TH2 ? ╱                              └─────────────────┘
              ╲─────────╱
                 │ YES
                 ▼
     ┌───────────────────────┐
     │ DETERMINE TOUCH-DOWN STATE │── S306
     └───────────┬───────────┘
                 │
                 ▼
          ┌─────────────┐
          │     END     │
          └─────────────┘
```

FIG. 15

# FIG. 16

# FIG. 17

FIG. 18

**EP 2 385 523 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020100027541
- US 20080239581 A1
- US 20080225426 A1
- US 20020097513 A1
- US 7375915 B1